# EUROPÄISCHE PATENTANMELDUNG

(11) **EP 2 478 765 A2**
(43) Veröffentlichungstag der Anmeldung: **25.07.2012**
(21) Anmeldenummer: 12151763.5
(22) Anmeldetag: 19.01.2012
(51) Int. Cl.: A01M 29/12

(54) **Vorrichtung zum Freisetzen eines flüchtigen Wirkstoffs, Verfahren zur Herstellung einer solchen Vorrichtung sowie deren Verwendung**

(30) Priorität: 19.01.2011 DE 102011000223
(71) Anmelder: Acuros GmbH, 13357 Berlin (DE)
(72) Erfinder: Guschauski, Thilo Philipp, 10439 Berlin (DE); Adleff, Helge, 10407 Berlin (DE)
(74) Vertreter: Zimmermann & Partner

(57) **Zusammenfassung**

Vorrichtung zum Freisetzen eines flüchtigen Wirkstoffs, umfassend einen Aufnahmeraum (3), der zumindest bereichsweise von einer Transpirationsschicht (2) begrenzt ist. Der Aufnahmeraum (3) ist zumindest teilweise mit einem Flüssigkeitsgemisch aus zumindest einem flüssigen flüchtigen Wirkstoff und einer Hilfsflüssigkeit gefüllt. Das Flüssigkeitsgemisch aus flüssigem Wirkstoff und Hilfsflüssigkeit ist fähig, ein Azeotrop zu bilden. Die Transpirationsschicht (2) ist für die flüssige Phase des Flüssigkeitsgemisches undurchlässig, für dessen Gasphase jedoch durchlässig.

## Beschreibung

Die vorliegende Erfindung betrifft eine Vorrichtung, beispielsweise einen Dispenser oder eine Darreichungsform zur gesteuerten Freisetzung eines flüchtigen Wirkstoffs, sowie dessen Herstellung und Verwendung zum Freisetzen eines flüchtigen Wirkstoffs.

Hinsichtlich der jeweiligen Anwendung ist das Dispensieren von flüchtigen Substanzen Gegenstand so unterschiedlicher Fälle wie Abwehr oder Anlockung von Schädlingen, Beduftung und Desodorierung, Dekontamination, Signalisierung, Sterilisation oder human-und veterinärmedizinischer Behandlungen. Dabei ist die kontrollierte Freisetzung, d.h. die Steuerung der Freisetzungskinetik des jeweiligen Wirkstoffs über längere Zeiträume ein Gebiet von besonderem Interesse.

Hinsichtlich ihrer Verwendbarkeit als Wirkstoff ist das Dispensieren organischer Säuren von besonderem Interesse. Beispielsweise ist das Dispensieren von Ameisensäure in Bienenwohnungen eine bekannte Methode der Bekämpfung von Varroa-Milben in befallenen Bienenstöcken. Varroa-Milben sind Parasiten der Honigbiene und verursachen weltweit zunehmend substantielle Verluste von Bienenvölkern. Eine bekannte Methode zur Behandlung der Varroatose besteht darin, über einen Zeitraum von einigen Tagen bis zu mehreren Wochen einen bestimmten Dampfdruck von Ameisensäure im Bienenstock aufrecht zu erhalten, wobei die Konzentration der Ameisensäure für die Milben letal, für die Mehrheit der Bienen jedoch lediglich subletal ist. Unterschiedliche Verfahren und Vorrichtungen für das Dispensieren von Ameisensäure sind bekannt, wobei alle die Gefahr des direkten Kontakts mit flüssiger Ameisensäure beinhalten.

DD 292141 und WO 97/32470 legen Verfahren und Vorrichtungen zum Evaporieren von Flüssigkeiten, insbesondere Ameisensäure, offen, die Kapillarströmung in einem Evaporationselement ausnutzen. Darin beschriebene Vorrichtungen umfassen einen Behälter und eine Evaporationskammer. DE 3427330 legt eine Vorrichtung zur Varroabehandlung offen, welche eine Weichfaserplatte umfasst, die mit konzentrierter Ameisensäure vollgesogen und von einem Plastikbeutel mit 5 bis 15 Löchern auf jeder Seite umhüllt ist. WO 94/19043 beschreibt einen Dispenser zur Verabreichung flüssiger flüchtiger Medikamente durch eine flüssigkeitsundurchlässige Folie.

Vor diesem Hintergrund wird gemäß Anspruch 1 eine Vorrichtung, beispielsweise ein Dispenser, zur gesteuerten Freisetzung oder Abgabe (Dispensieren) eines flüchtigen Wirkstoffs bereitgestellt. Weiterhin wird ein Verfahren zur Herstellung einer Vorrichtung gemäß Anspruch 9 oder 11 bereitgestellt. Weiterhin werden Verwendungen der Vorrichtung zum Freisetzen oder Abgabe des flüchtigen Wirkstoffs vorgeschlagen. Weitere vorteilhafte Ausgestaltungen, Einzelheiten und Merkmale der vorliegenden Erfindung ergeben sich aus den Unteransprüchen, der Beschreibung, den Ausführungsbeispielen sowie den beigefügten Figuren.

Nach einer beispielhaften Ausführungsform der vorliegenden Erfindung wird vorgeschlagen, eine flüchtige Substanz mittels Transpiration durch eine Barriereschicht gemäß eines vorab über die Zusammensetzung eines flüssigen Gemischs definierten zeitlichen Konzentrationsverlaufs an die Umgebung abzugeben. Dabei besteht zu keinem Zeitpunkt ein direkter Kontakt zwischen der flüssigen Phase der flüchtigen Substanz und der Umgebung.

Im Unterschied zu bekannten Verfahren der Verwendung einer Barriereschicht kann die sich über die Dauer der Freisetzung verändernde Zusammensetzung einer Mischung des flüssigen Wirkstoffs mit einer Hilfsflüssigkeit dazu genutzt werden, insbesondere den anfänglichen Verlauf der gasförmig in die Umgebung abgegebenen Wirkstoffmenge zu steuern.

Somit kann in einem definierten Raum bei bekannten Austauschraten, d.h. Werten der pro Zeiteinheit zuströmenden und abströmenden Volumina, der Zeitpunkt des Erreichens einer vorgegebenen mittleren Konzentration des Wirkstoffs eingestellt werden. Ebenso kann ein zeitlicher Verlauf der mittleren Konzentration des Wirkstoffs eingestellt werden, beispielsweise in Form eines zweiphasigen Freisetzungsprofils.

Zunächst soll der zur detaillierten Beschreibung der Erfindung verwendete Begriff Azeotrop erläutert werden. Wie nachfolgend verwendet, soll unter einem Azeotrop das Gemisch von mindestens zwei Flüssigkeiten verstanden werden, dessen Dampf dieselbe Zusammensetzung (bsp. Konzentrationsverhältnis) wie die flüssige Phase des Gemisches hat.

Nach dem Verhältnis der Siedetemperaturen des Gemischs und der Einzelflüssigkeiten lassen sich positive und negative Azeotrope unterscheiden. Beim positiven Azeotrop hat das Gemisch einen geringeren Siedepunkt als die jeweiligen einzelnen Flüssigkeiten. Im Falle eines negativen Azeotrop liegt der Siedepunkt des Gemischs über dem der jeweiligen Einzelflüssigkeiten. Am sogenannten azeotropen Punkt haben die Dampfphase und die Lösung des azeotropen Gemisches die gleiche Zusammensetzung und die Konzentration beider Phasen ändert sich beim weiteren Verdampfen nicht.

Nachfolgend wird die vorliegende Erfindung beispielhaft an Hand von Figuren erläutert. Dabei zeigt:
- Fig. 1: den Aufbau einer Dispensiervorrichtung im geschlossenen, versiegelten Zustand;
- Fig. 2: den Aufbau einer Dispensiervorrichtung gemäß einer beispielhaften Ausführungsform während des Öffnens bzw. im geöffneten Zustand;
- Fig. 3: den Aufbau einer Dispensiervorrichtung gemäß einer weiteren beispielhaften Ausführungsform;
- Fig. 4: den Querschnitt einer weiteren Ausführungsform einer Dispensiervorrichtung;
- Fig. 5: den Aufbau einer in einer Hülle mit einer Öffnung befindlichen Dispensiervorrichtung gemäß Fig. 4;
- Fig. 6: den zeitlichen Verlauf der Freisetzung von Ameisensäure durch eine Dispensiervorrichtung in verschiedenen Betriebszuständen gemäß Fig. 1 und Fig. 2.

Gemäß verschiedener Ausführungsformen weist eine Vorrichtung oder Dosiervorrichtung 10, beispielsweise ein Dispenser, zum Freisetzen bzw. zur Abgabe eines flüssigen Wirkstoffs (oder einer flüchtigen flüssigen Substanz) einen Behälter 3, der hier einen Aufnahmeraum für den flüssigen flüchtigen Wirkstoff 4 bildet, und eine Transpirationsfläche 2 auf, die für den gasförmigen flüchtigen Wirkstoff zwar permeabel, für den Wirkstoff in flüssiger Form jedoch abweisend und impermeabel ist. Der Behälter 3 des betriebsbereiten Dispensers enthält ein flüssiges Gemisch des Wirkstoffs mit einer Hilfsflüssigkeit. Als Hilfsflüssigkeit kommen Substanzen in Betracht, die mit dem Wirkstoff ein Azeotrop bilden.

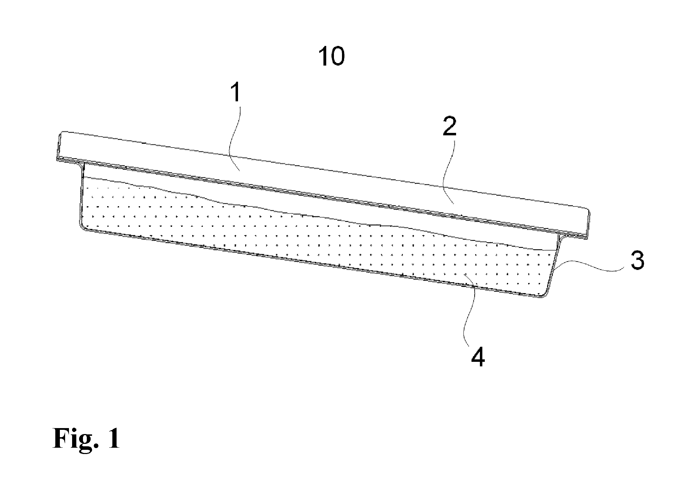

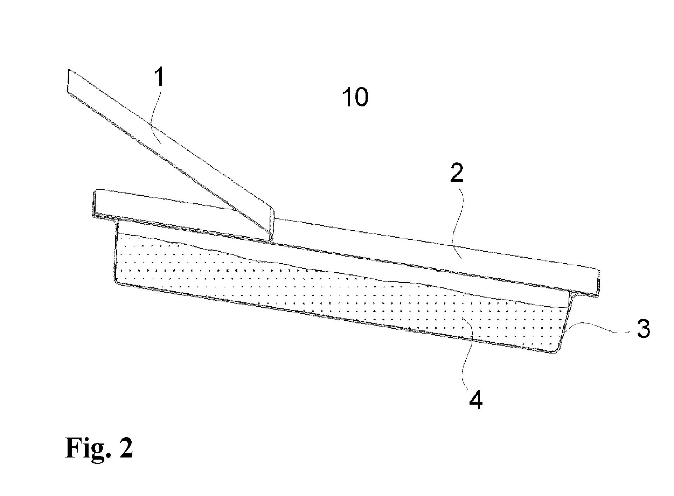

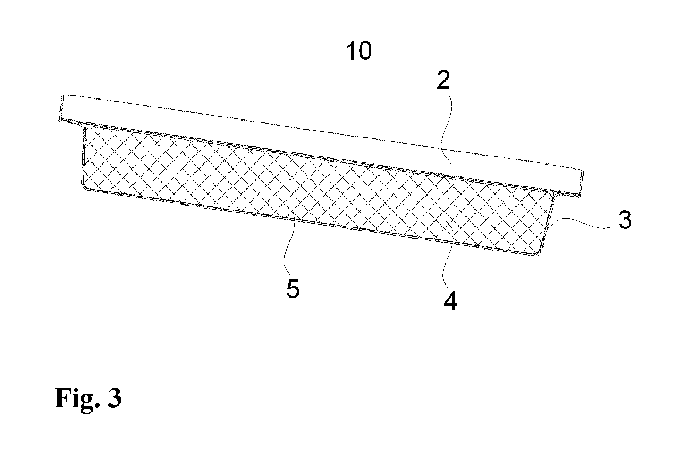

Wie in den Figuren 1 bis 5 dargestellt, umfasst die beispielhafte Dosiervorrichtung 10 einen Behälter 3 für den flüssigen flüchtigen Wirkstoff, die im Folgenden auch als Substanz bezeichnet wird. Die Vorrichtung 10 wird zumindest teilweise von einer als Transpirationsschicht 2 genutzten porösen Barriere begrenzt, die für den flüssigen flüchtigen Wirkstoff 4 abweisend, für seine Gasform jedoch durchlässig ist.

Die Transpirationsschicht 2 kann eine poröse Schicht, Membran, Folie oder Film darstellen. Beispielsweise kann die Transpirationsschicht in Form einer geeigneten Barriere ausgebildet sein. Beispiele sind Folien aus einem hydrophoben oder oleophoben Material. Beispielsweise kann das Material der Transpirationsschicht Polyethylen, Polypropylen, Polytetrafluorethylen oder ein anderes Material mit einer geringen Oberflächenenergie sein. Ebenso kann die Transpirationsschicht durch eine Metallschicht, eine Keramikschicht, eine Kernspurmembran oder ein Papier gebildet sein. Alternativ kann das Material der als Transpirationsschicht 2 genutzten porösen Barriere vorab chemisch oder physikalisch so behandelt worden sein, dass es hydrophobe oder oleophobe Eigenschaften aufweist. Die Porendurchmesser der Transpirationsschicht 2 liegen beispielsweise zwischen weniger als 10 Nanometern und mehr als 10 Mikrometern. Eine beispielhafte Auswahl von als Transpirationsschichten geeigneten Membranen oder Folien umfasst Membranen mit Porenweiten zwischen 10 Nanometern und 10 Mikrometern. Die als Transpirationsschicht 2 geeigneten Schichten, Membranen, Folien oder Filme stellen somit ultra- und/oder nano- und/oder mikroporöse Schichten, Membranen, Folien oder Filme dar.

Die Transpirationsschicht 2 kann zumindest zeitweise und vornehmlich vor ihrer Verwendung zur gasförmigen Freisetzung flüssiger flüchtiger Wirkstoffe von einer impermeablen Barriere 1, beispielsweise in Form einer Barriereschicht, abgedeckt sein, die für den flüchtigen Wirkstoff 4 im flüssigen und gasförmigen Zustand undurchlässig ist. Auch die impermeable Barriereschicht kann aus einem hydrophoben oder oleophoben, oder aus einem vorab hydrophob oder oleophob gemachten Material gebildet sein. Ebenso kann die impermeable Barriere auch eine dünne Metallfolie, beispielsweise Aluminiumfolie oder eine mit einer dünnen Metallschicht versehene Polymerfolie darstellen.

Die impermeable Barriere 1 kann so angeordnet sein, dass sie vor der Anwendung der Vorrichtung 10 vollständig oder teilweise abgezogen oder anderweitig vollständig oder teilweise entfernt werden kann, um den Freisetzungsvorgang durch die Transpirationsschicht 2 zu starten.

Der Behälter 3 kann in seinem Inneren teilweise oder vollständig mit einem benetzbaren porösen Material 5 gefüllt sein, das als Speichermatrix fungiert um die gleichmäßige Verteilung der flüssigen flüchtigen Substanz 4 im Behälter 3 und eine gleichmäßige Transpirationsrate durch die Transpirationsschicht 2 zu unterstützen. Der Behälter 3 und/oder das benetzbare poröse Material 5 bilden ein Wirkstoffreservoir. Darüber hinaus kann das als Speichermatrix fungierende benetzbare poröse Material 5 bzw. das von ihm gebildete Wirkstoffreservoir die Transpirationsschicht 2 mechanisch stützen. Eine ähnliche Wirkung kann durch eine benetzbare poröse Schicht 2a erreicht werden, die der Transpirationsschicht (poröse Barriere) 2 anliegt.

Das als Speichermatrix fungierende benetzbare poröse Material 5 kann beispielsweise Zellulose, Viskose, Polyester, Polyamid oder ein anderes von der flüssigen flüchtigen Substanz 4 und der Hilfsflüssigkeit benetzbares, oder für diese benetzbar gemachtes Material aufweisen.

In einer beispielhaften, in den Figuren 1 bis 3 gezeigten Ausführungsform besteht die Vorrichtung 10 aus einem einzigen Material. Beispielsweise bildet eine Polypropylen-Schale den Behälter 3 und stellt die äußere Form des Dispensers dar. Eine poröse Folie aus Polypropylen bildet als poröse Barriere die Transpirationsschicht 2 und ist auf die Schale gesiegelt, wobei sie die Schale 2 verschließt. Eine nicht-poröse Polypropylen-Folie bildet eine impermeable Barriereschicht 1 und ist am Rand der den Behälter bildenden Schale über die poröse Folie gesiegelt. Für den Start des Freisetzungsvorganges wird sie ganz oder teilweise abgezogen.

Gemäß einer beispielhaften Ausführungsform weist eine impermeable Barriereschicht 1 über der Transpirationsschicht 2 mehrere benachbart angeordnete Öffnungen oder Löcher auf, die zunächst durch ein Segment oder mehrere voneinander unabhängige Segmente einer impermeablen Barriere verschlossen sind. Durch die Zahl der mit dem Abziehen dieses einen oder mehrere Segmente gleichzeitig freigelegten Öffnungen, kann die Freisetzungskinetik und die Nutzungsdauer der Dispensiervorrichtung dem jeweiligen Raumvolumen bzw. der jeweiligen Raumgröße, bzw. der jeweiligen Anwendung angepasst und zusätzlich gesteuert werden.

Alternativ können alle beschriebenen Kunststoffteile der Vorrichtung beispielsweise aus Polytetrafluorethylen, Polyethylen oder einem anderen Polyolefin, beispielsweise einem Cycloolefin-Polymer oder einem Cycloolefin-Copolymer bestehen.

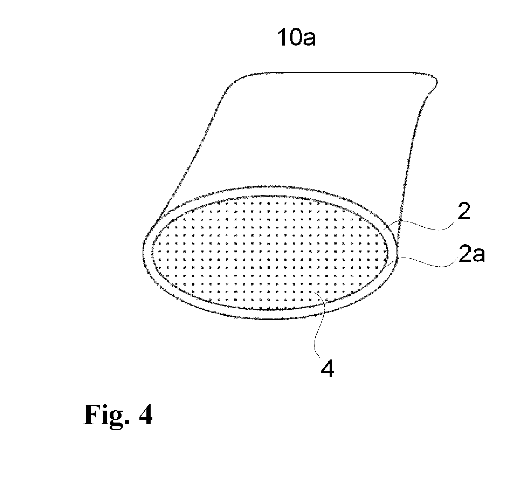

Eine weitere beispielhafte Ausführungsform 10a der Vorrichtung 10 stellt ein Beutel oder ein an beiden Enden geschlossener Schlauch aus einer oder mehreren flexiblen Folien oder einem Folienlaminat dar. Der Beutel definiert hier einen Aufnahmeraum. Eine solche Vorrichtung (Dispenser) 10a ist in Fig. 4 gezeigt. Mindestens eine der Folien stellt eine im Betriebszustand als Transpirationsschicht 2 fungierende poröse Barriere dar. Die oben erwähnte Funktion einer mechanischen Stütze in der Form des Dispensers 10a kann durch eine benetzbare poröse Schicht 2a erreicht werden, die gleichzeitig als Speichermatrix fungiert und die der porösen Barriere 2 anliegt. Der Beutel ist mit einem Gemisch des flüssigen flüchtigen Wirkstoffs 4 mit einer Hilfsflüssigkeit gefüllt und Transpiration findet an dem Teil der Oberfläche des Beutels statt, der von der Transpirationsschicht 2 gebildet wird. Alternativ findet die Transpiration an der gesamten Oberfläche des Beutels statt, wenn dieser vollständig aus einer geeigneten porösen Folie ausgebildet ist. Als Transpirationsschicht geeignete poröse Folien sind beispielsweise poröse Membranen aus Polypropylen, Polyethylen, Polytetrafluorethylen, expandiertem Polytetrafluorethylen, Polyethersulfon oder einem anderen Stoff, der mit einem der genannten Stoffe beschichtet wurde, oder andere Membranen, beispielsweise aus Zellulose oder regenerierter Zellulose, die durch eine Beschichtung hydrophobe oder oleophobe Eigenschaften erhalten haben.

Eine Vorrichtung in Form eines schlauchförmigen Dispensers 10b kann bis zum Moment der Inbetriebnahme in einer mit einer Sollbruchstelle (Einriss) versehenen geeigneten, als Behälter 3 dienenden Hülle verpackt sein. Beispielsweise stellt eine solche Hülle eine flexible undurchlässige Barriereschicht 1 dar. So kommt beispielsweise als Umhüllung ein aus einem impermeablen Material gebildeter Schlauch in Betracht, der an seinen Enden 6 durch Versiegeln über seine gesamte Breite 8 verschlossen ist.

Alternativ kann ein derartiger Schlauch oder eine beidseitig verschlossene Röhre ein oder mehrere Fenster 9 oder Perforationen aufweisen. Durch das Entfernen einer auf bzw. über Fenster oder Perforationen laminierten impermeablen Folie 1 lassen sich diese öffnen. Das bietet den Vorteil, dass eine Entnahme des Dispensers 10b aus der als Behälter 3 dienenden Hülle zum Zweck der Freisetzung des Wirkstoffs nicht erforderlich ist.

Die Speichermatrix des Dispensers 10b ist mit dem den Wirkstoff 4 enthaltenden Gemisch getränkt und wird im Inneren des Behälters 3 beispielsweise vollständig von einer als Transpirationsschicht geeigneten porösen Barriere 2 umhüllt.

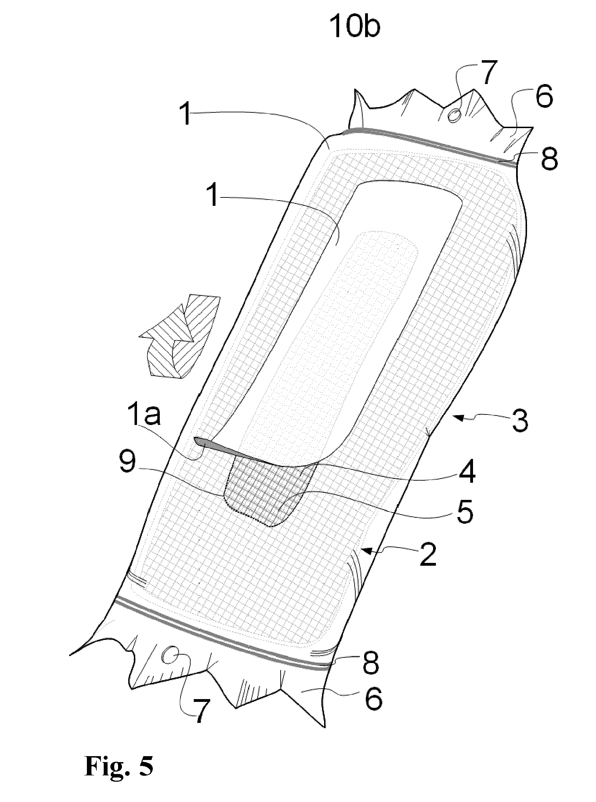

Fig. 5 zeigt die perspektivische Darstellung einer derartigen beispielhaften Ausführungsform eines Dispensers 10b. Das hier beispielsweise in Form einer Lasche abziehbare Segment einer impermeablen Folie 1 (Vgl. schraffierter Pfeil) kann mittels Lamination oder auch mit einem Kleber an seiner Unterseite 1a auf dem als Behälter dienenden Folienschlauch so befestigt sein, dass das Fenster 9 zunächst verschlossen ist. Zusätzlich kann der Behälter 3 am äußeren Rand eines oder beider seiner Enden mit kleinen Durchbrüchen 7 versehen sein, die eine Befestigung mit einem geeigneten Befestigungsmittel erlauben.

Ein beschriebener Dispenser kann zum einen bereits mit seiner Herstellung in einen betriebsbereiten Zustand versetzt sein, enthält also das Gemisch von flüssigem flüchtigen Wirkstoff und Hilfsflüssigkeit in einer Speichermatrix unter einer als Transpirationsschicht geeigneten porösen Barriere, die wiederum von einer impermeablen Barriereschicht gegen die Außenwelt abgegrenzt wird. Zum anderen ist es ebenso möglich, ein nicht oder nur teilweise von einer impermeablen Barriere 1 umhülltes, als Speichermatrix geeignetes, d.h. benetzbares poröses Material 5 bereitzustellen, das dann vollständig oder zumindest teilweise von der als Transpirationsschicht geeigneten porösen Barriere 2 umschlossen ist. Im Fall der teilweisen Abdeckung sind aneinander grenzende Ränder der impermeablen Barriere 1 und der als Transpirationsschicht geeigneten porösen Membran 2 fest miteinander verbunden. Die so umhüllte Speichermatrix enthält den Wirkstoff zunächst noch nicht.

Das Befüllen eines derartigen, zunächst keinen Wirkstoff enthaltenden Dispensers kann beispielsweise mittels Injektion eines vor Ort bereiteten Gemischs durch einen Abschnitt der frei liegenden Transpirationsschicht in die Speichermatrix erfolgen. Die dabei in der Transpirationsschicht entstandene Injektionsöffnung kann mit einem Segment einer mit Kleber beschichteten impermeablen Barriere oder einem Tropfen eines Klebers versiegelt werden.

Das bietet den Vorteil, eine der jeweils beabsichtigten Anwendung angepasste Freisetzungskinetik einstellen zu können, beispielsweise im Rahmen eines verschiedene Dosier-Zyklen umfassenden Freisetzungsschemas des Wirkstoffs.

Damit stellt die beschriebene Mischung eines flüchtigen Wirkstoffs mit einer Hilfsflüssigkeit, die mit dem Wirkstoff ein Azeotrop bildet die Formulierung des Wirkstoffes dar. Ein mit dem formulierten Wirkstoff befüllter Dispenser wiederum stellt eine Darreichungsform zur systemischen und/oder inhalativen Verabreichung eines Wirkstoffes dar.

Gemäß einer Ausführungsform kann die anfängliche Konzentration des Wirkstoffs im Flüssigkeitsgemisch größer als die Konzentration des Wirkstoffs am azeotropen Punkt des Flüssigkeitsgemisches sein. Gemäß einer Ausführungsform kann die anfängliche Konzentration des Wirkstoffs im Flüssigkeitsgemisch kleiner als die Konzentration des Wirkstoffs am azeotropen Punkt des Flüssigkeitsgemisches ist. Gemäß einer Ausführungsform kann die anfängliche Konzentration des Wirkstoffs im Flüssigkeitsgemisch der Konzentration des Wirkstoffs am azeotropen Punkt des Flüssigkeitsgemisches entsprechen. Die anfängliche Konzentration bedeutet hier beim Befüllen der Vorrichtung.

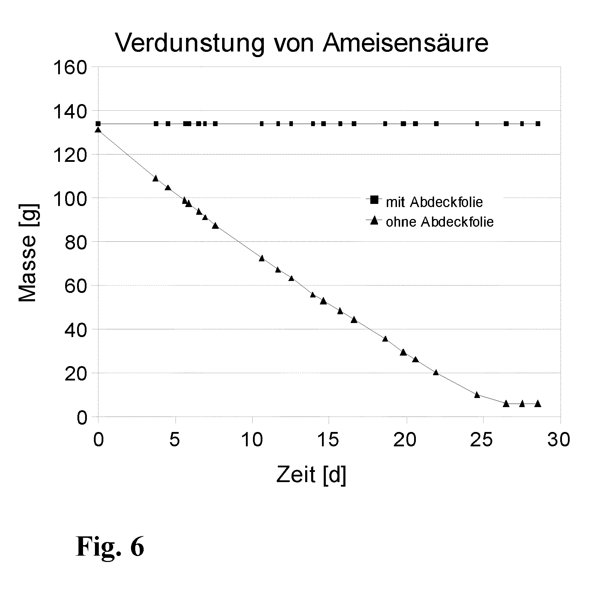

Wie am horizontalen Kurvenverlauf der Messwerte in Fig. 6 gezeigt, kann ein vollständig von einer impermeablen Membran umhüllter Dispenser der vorstehend beschriebenen Bauart ohne Verlust des eingeschlossenen flüchtigen Wirkstoffs bzw. Substanz 4 aufbewahrt werden (Die Masse des Flüssigkeitsgemisches bleibt über der Zeit konstant). Eine Dispensierung von flüchtigem Wirkstoff 4 tritt erst ein, nachdem die impermeable Abdeckfolie (Barriereschicht) abgezogen wurde. Wie der Verlauf der zweiten, mit der Zeit abfallenden Kurve in Fig. 6 zeigt, ist die Transpirationsrate ohne die impermeable Folie nahezu konstant (Die Masse des Flüssigkeitsgemisches verringert sich mit konstanter Rate), bis der gesamte flüchtige Wirkstoff 4 dispensiert wurde.

In Abhängigkeit von der Zusammensetzung des Gemisches aus zumindest zwei miteinander ein Azeotrop bildenden Flüssigkeiten, des Wirkstoffs und der Hilfsflüssigkeit, im Dispenser 10, 10a, 10b, bzw. in dessen benetzbarem porösen Material, bzw. der Speichermatrix 5, können verschiedene Dispensierprofile eines Wirkstoffs erzielt werden. Beispielsweise wird die Zusammensetzung einer Mischung des flüssigen Wirkstoffs mit einer Hilfsflüssigkeit dazu genutzt, die erste Phase der Freisetzung des gasförmig in die Umgebung abgegebenen Wirkstoffs zu steuern. Insbesondere wird die Anfangskonzentration des Wirkstoffs in der Gasphase festgelegt.

Die festgelegte Konzentration des Wirkstoffs im Gemisch bestimmt den zeitlichen Verlauf der Freisetzung, d.h. die Freisetzungskinetik. Damit bestimmen die Wahl der Hilfsflüssigkeit, die mit dem flüssigen Wirkstoff ein Azeotrop bilden kann, sowie die gewählte Konzentration des Wirkstoffs im Gemisch, bezogen auf den azeotropen Punkt der Mischung von Hilfsflüssigkeit und Wirkstoff, die erste Phase des Freisetzungsprofils bis zum Erreichen des azeotropen Punktes. Mit dem Erreichen der Konzentration des Wirkstoffs am azeotropen Punkt tritt keine weitere Veränderung der Konzentration des Wirkstoffs (und der Hilfsflüssigkeit) über die nachfolgende Dauer der Freisetzung bzw. während der zweiten Phase der Freisetzung auf.

Damit kann die Konzentration des Wirkstoffs am azeotropen Punkt sowohl von Konzentrationswerten oberhalb startend, als auch von Konzentrationswerten unterhalb der Konzentration des Wirkstoffs startend erreicht werden. Ebenso ist es möglich, die Konzentration des Wirkstoffs in der Gasphase sofort und während der gesamten Dauer der Freisetzung auf einen Wert einzustellen, der jener Konzentration des Wirkstoffs am azeotropen Punkt einer Mischung aus Wirkstoff und beteiligtem Hilfsstoff gleicht oder nahe kommt.

### Beispiel 1

In einem Beispiel wird 77,5 %-ige Ameisensäure, entsprechend dem azeotropen Punkt wässriger Ameisensäure, als flüssigen flüchtigen Wirkstoff 4 in einem Dispenser 10 verwendet. Wird nun die impermeable Barriereschicht 1 entfernt und die Ameisensäure kann als Gas durch die für Flüssigkeiten impermeable Transpirationsschicht 2 freigesetzt werden, so bleibt die Konzentration der Ameisensäure während des gesamten Dispensiervorganges gleich. Daher ändert sich auch die Dispensierrate der Ameisensäure nicht. Die erreichte Freisetzungskinetik beruht darauf, dass Ameisensäure mit Wasser ein negatives Azeotrop bildet.

### Beispiel 2

In einem weiteren Beispiel wird 85 %-ige Ameisensäure als flüssigen flüchtigen Wirkstoff 4 in einem Dispenser 10 verwendet. In der Gasphase liegt die Konzentration der Ameisensäure zu Beginn des Dispensiervorganges über 85 %, so dass die Konzentration in der Flüssigphase allmählich abnimmt, bis sie bei 77,5% den azeotropen Punkt erreicht. Danach ändert sich die Konzentration der Ameisensäure im flüssigen Gemisch (in der Speichermatrix) nicht mehr. Die Konzentration der Ameisensäure in der Gasphase folgt diesem Konzentrationsverlauf. Demnach ist die Dispensionsrate von Ameisensäure zu Beginn am höchsten, nimmt allmählich ab und nähert sich einem konstanten Wert, der der Konzentration im azeotropen Punkt entspricht.

### Beispiel 3

In einem weiteren Beispiel wird 60 %-ige Ameisensäure als flüssigen flüchtigen Wirkstoff 4 in einem Dispenser 10 verwendet. In der Gasphase liegt die Konzentration der Ameisensäure zu Beginn des Dispensiervorganges unter 60 %, so dass ihre Konzentration in der Flüssigphase allmählich wächst, bis sie bei 77,5% den azeotropen Punkt erreicht hat und sich nun nicht weiter verändert. Die Konzentration der Ameisensäure folgt diesem Konzentrationsverlauf. Demnach ist die Dispensionsrate von Ameisensäure zu Beginn am geringsten, nimmt allmählich zu und nähert sich einem konstanten Wert.

### Beispiel 4

Ein Gemisch aus Chloroform und Methanol bildet ein positives Azeotrop, da der Dampfdruck der Lösung über dem theoretischen Wert nach dem Raoult'schen Gesetz für ideale Mischungen liegt. Der azeotrope Punkt liegt für dieses Gemisch bei 87 % Chloroform und 13 % Methanol.

In einem Beispiel wird ein Gemisch aus 87 % Chloroform und 13 % Methanol, entsprechend dem azeotropen Punkt des Gemisches, als flüssigen flüchtigen Wirkstoff 4 in einem Dispenser 10 verwendet. Die Zusammensetzung der Gasphase unterscheidet sich während der gesamten Anwendungsdauer nicht von der in der Flüssigphase. Die Dispensionsrate von Chloroform, bzw. Methanol, ist gleichbleibend.

### Beispiel 5

In einem weiteren Beispiel wird ein Gemisch aus 80 % Chloroform und 20 % Methanol verwendet. Da es sich um ein positives azeotropes Gemisch handelt, ist die Zusammensetzung in der Gasphase näher am azeotropen Punkt als in der Flüssigphase. Bei fortschreitendem Verdampfen des Gemisches entfernt sich die Konzentration der Flüssig- und der Gasphase folglich immer weiter vom azeotropen Punkt. Im vorliegenden Beispiel liegt die Konzentration von Chloroform im Dampf zu Beginn demnach bei über 80 % und nimmt, der Konzentration der Flüssigphase folgend, allmählich ab, bis das Gemisch vollständig verdampft ist. Die Dispensionsrate für Chloroform nimmt demzufolge während der Anwendung kontinuierlich ab.

Für die Komponente des positiven azeotropen Gemisches, dessen Konzentration über dem azeotropen Punkt liegt, im dargestellten Beispiel Methanol, gilt entsprechend das Umgekehrte.

Entsprechendes gilt für alle flüssigen flüchtigen Stoffe, die ein positives azeotropes Gemisch bilden.

### Beispiel 6

In einem weiteren Ausführungsbeispiel ist die flüchtige Substanz ein Pheromon oder eine Verbindung mit Pheromonaktivität bzw. stellt ein Gemisch solcher dar. Beispielsweise können mit einem Dispenser 10, 10a, 10b ausgestatteten Pheromon-Fallen zum Fang von Schadinsekten verwendet werden. Durch zielgerichtete Wahl des jeweiligen Pheromons, der jeweiligen Freisetzungskinetik und des Aufstellungsortes des Dispensers ist es möglich, Schadinsekten zu vertreiben oder zu verwirren. Eine gemäß diesem Beispiel konzipierte Anwendung des Dispensers kann beispielsweise im Obst-, Gemüse- oder Zierpflanzenanbau eingesetzt werden. Beispielsweise können auch Befallsdichten offener oder geschlossener Anlagen ermittelt werden. Ebenso können Schädlinge in Lager- oder Vorratsräumen bekämpft werden, bzw. der Schädlingsbefall überwacht werden.

### Beispiel 7

Gemäß einer weiteren Verwendung eines Dispensers der beschriebenen Bauarten kann die Atmosphäre von Vorratsräumen, Lagerräumen, Verkaufsräumen, Wohn-, Schlaf und Toilettenraumen oder in Krankenzimmern mit Wirkstoffen angereichert werden, beispielsweise zur Bekämpfung von Schädlingen, zur Desodorierung, zur Steigerung des Wohlbefindens oder zur Linderung von Atembeschwerden. Beispielsweise kann der Innenraum eines Kraftfahrzeugs oder eines Flugzeugs desodoriert, aromatisiert oder mit Substanzen zur Steigerung des Wohlbefindens angereichert werden.

### Beispiel 8

Gemäß einer weiteren Ausführungsform enthält die flüchtige Substanz Ameisensäure und wird in Bienenwohnungen zur Behandlung der Varroatose eingesetzt. Eine beispielhafte Ameisensäurekonzentration liegt zwischen 40 % und 98 %, in einer weiteren beispielhaften Ausführungsform beträgt die Konzentration 60 %, in einer anderen beispielhaften Ausführungsform beträgt sie 77,5% und in einer weiteren 85 %.

Da ein Bienenstock bei nur geringfügigen Schwankungen der Innentemperatur einen definierten Raum mit bekannten Volumenströmen der zu- und abströmenden Luft darstellt, kann ein vorstehend beschriebener Dispenser vorteilhaft zur gesteuerten Freisetzung von Ameisensäure zur Bekämpfung der Varroatose eingesetzt werden. Bei geeigneter Wahl der Konzentration wässriger Ameisensäure ist die Bekämpfung der parasitierenden Milben effektiv, ohne dabei das Bienenvolk zu stark zu belasten.

Beispielsweise kann es dabei vorteilhaft sein, die Dispensierrate allmählich zu verringern oder zu steigern, bevor eine bestimmte gewünschte Dispensierrate erreicht wird, welche sodann innerhalb einer bevorzugten Toleranz aufrecht erhalten wird. Das ist beispielsweise für die hier beschriebene Verwendung von Ameisensäure bei der Behandlung der Varroatose vorteilhaft.

Es ist ein zusätzlicher Vorteil der beispielhaft beschriebenen Ausführungsformen, dass das Verletzungsrisiko durch Ausschluss eines direkten Kontakts der flüssigen Wirkstoffe mit der Umwelt, Menschen, Tieren und Pflanzen zuverlässig vermieden wird. Besonders augenfällig wird dieser Vorteil im Fall der zur Varroa-Bekämpfung eingesetzten Ameisensäure.

Ein weiterer Vorteil der beschriebenen Ausführungsformen bzw. ihres Einsatzes für die Behandlung von Tier- und Pflanzenkrankheiten durch die Verabreichung flüchtiger Substanzen und Wirkstoffe in die Atemluft besteht darin, den Partialdruck des jeweiligen Wirkstoffes zunächst allmählich auf einen gewünschten Wert erhöhen zu können, der dann aufrechterhalten wird.

Das ist beispielsweise vorteilhaft im Fall der Bekämpfung von Varroa-Milben in Bienenwohnungen, da der Partialdruck der Säure in der Bienenwohnung hierdurch allmählich ansteigt, ehe er seinen wirkungsvollsten Wert erreicht. Diese Methode erlaubt es den Bienen, sich an die Behandlung zu gewöhnen und verursacht geringere Verluste am Bienenvolk.

Im Unterschied zu vorbekannten Dispensiervorrichtungen, die Pumpen, Heizelemente, Dochte oder andere zusätzliche Mittel zum Dispensieren von flüchtigen Substanzen erfordern, ist die vorgeschlagene Verwendung von flüssigen Mischungen eines Wirkstoffs mit einer Hilfssubstanz die mit dem Wirkstoff ein Azeotrop bilden kann, wesentlich einfacher. Ein weiterer Vorteil ist, dass die Zusammensetzung der flüssigen Mischungen und der Gasphase der Mischungen im Verlauf des Dispensiervorgangs verändert werden kann, was bei vorbekannten Dispensiervorrichtungen selbst dann nicht möglich ist, wenn mit diesen eine Mischung verwendet wird, die ein Azeotrop bilden kann.

Ein Vorteil der Freisetzung von organischen Säuren, oder anderweitig in konzentrierter Form aggressiven Flüssigkeiten, mit der erfindungsgemäßen Dispensiervorrichtung besteht darin, dass die flüssige Form der flüchtigen Substanz an der Membran im Gegensatz zu üblichen Evaporationsflächen nicht in direktem Kontakt mit der Umgebung steht und ausschließlich als Gas oder Dampf freigesetzt wird.

Die Verwendung bekannter Dispenser beschränkt sich zumeist auf die Verwendung einer festgelegten Zusammensetzung der flüssigen flüchtigen Substanz im Behälter, die sich während der Anwendung nicht ändert.

Im Gegensatz dazu, stellt die hier zur Befüllung des Dispensers gewählte Flüssigkeit ein ausgewähltes Gemisch von miteinander ein Azeotrop bildenden Substanzen dar, nämlich ein flüssiges Gemisch des flüchtigen Wirkstoffs mit einer dem gewünschten Freisetzungsprofil und der jeweiligen Anwendung angepassten Hilfsflüssigkeit. Die gezielte Änderung der Zusammensetzung dieses Gemisches in Wechselwirkung mit der Konzentration in der Gasphase der Umgebung wird zur Steuerung der Kinetik der Freisetzung des flüchtigen Wirkstoffes in die Umgebungsluft eines abgegrenzten bzw. abgeschlossenen Raumes genutzt. Beispielsweise wird die gezielte Änderung der Zusammensetzung dieses Gemisches in Wechselwirkung mit der Konzentration in der Gasphase der Umgebung zur Freisetzung gemäß eines zwei Phasen aufweisenden zeitlichen Verlaufs genutzt.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche stellen einen ersten, nicht bindenden Versuch dar, die Erfindung allgemein zu definieren.

## Patentansprüche

1. Vorrichtung zum Freisetzen eines flüchtigen Wirkstoffs, umfassend einen Aufnahmeraum (3), der zumindest bereichsweise von einer Transpirationsschicht (2) begrenzt ist, wobei
der Aufnahmeraum (3) zumindest teilweise mit einem Flüssigkeitsgemisch aus zumindest einem flüssigen flüchtigen Wirkstoff und einer Hilfsflüssigkeit gefüllt ist,
das Flüssigkeitsgemisch aus flüssigem Wirkstoff und Hilfsflüssigkeit fähig ist, ein Azeotrop zu bilden, und
die Transpirationsschicht (2) für die flüssige Phase des Flüssigkeitsgemisches undurchlässig, für dessen Gasphase jedoch durchlässig ist.

2. Vorrichtung nach Anspruch 1, wobei der flüchtige Wirkstoff ausgewählt ist aus der Gruppe umfassend Ameisensäure, einem Pheromon oder einer auf Insekten als Pheromon wirkenden Substanz, einem Hormon oder einer Substanz mit hormonaler Wirkung auf Pflanzen oder Tiere, einem Fungizid, einem Akarizid, einem Insektizid, einem Aromastoff, einem Duftstoff, und einer biologisch aktiven Substanz.

3. Vorrichtung nach Anspruch 1 oder 2, wobei die Transpirationsschicht (2) ein oleophobes oder oleophob gemachtes Polymer oder ein oleophobes oder ein oleophob gemachtes Papier umfasst.

4. Vorrichtung nach einem der Ansprüche 1 bis 3, weiterhin aufweisend eine entfernbare, impermeable Barriereschicht (1), welche die Transpirationsschicht (2) bedeckt, um ein Verdampfen des Flüssigkeitsgemisches zu unterbinden.

5. Vorrichtung nach Anspruch 4, wobei die Barriereschicht (1) zumindest eine linienförmige Sollbruchstelle und/oder eine Zone verringerter Dicke aufweist, die zur Entfernung eines Teils und/oder Abschnitts der Barriereschicht (1) geeignet ist, sodass nach dem teilweisen oder vollständigen Entfernen der Barriereschicht (1) zumindest ein Bereich der Transpirationsschicht (2) freiliegt.

6. Vorrichtung nach einem der Ansprüche 1 bis 5, wobei die Konzentration des Wirkstoffs im Flüssigkeitsgemisch größer als die Konzentration des Wirkstoffs am azeotropen Punkt des Flüssigkeitsgemisches ist.

7. Vorrichtung nach einem der Ansprüche 1 bis 5, wobei die Konzentration des Wirkstoffs im Flüssigkeitsgemisch kleiner als die Konzentration des Wirkstoffs am azeotropen Punkt des Flüssigkeitsgemisches ist.

8. Vorrichtung nach einem der Ansprüche 1 bis 7, wobei der Aufnahmeraum durch einen zumindest eine Öffnung aufweisenden Behälter gebildet wird, wobei die Transpirationsschicht (2) die Öffnung verschließt.

9. Verfahren zur Herstellung einer Vorrichtung zum Dispensieren eines flüchtigen Wirkstoffs, umfassend:
Bereitstellen eines Behälters;
zumindest teilweises Befüllen des Behälters mit einem Flüssigkeitsgemisch aus zumindest einem flüssigen flüchtigen Wirkstoff und einer Hilfsflüssigkeit, wobei der Wirkstoff und die Hilfsflüssigkeit so ausgewählt sind, dass das Flüssigkeitsgemisch aus flüssigem Wirkstoff und Hilfsflüssigkeit fähig ist, ein Azeotrop zu bilden;
Verschließen des Behälters mit einer Transpirationsschicht (2), die für die flüssige Phase des Flüssigkeitsgemisches undurchlässig, für dessen Gasphase jedoch durchlässig ist.

10. Verfahren nach Anspruch 9, weiterhin umfassend:
Aufbringen einer entfernbaren Barriereschicht auf die Transpirationsschicht (2).

11. Verfahren zur Herstellung einer Vorrichtung zum Freisetzen eines flüchtigen Wirkstoffs, umfassend:
Bereitstellen eines Aufnahmeraums, der zumindest bereichsweise von einer Transpirationsschicht (2) begrenzt ist;
zumindest teilweises Befüllen des Aufnahmeraums mit einem Flüssigkeitsgemisch aus zumindest einem flüssigen flüchtigen Wirkstoff und einer Hilfsflüssigkeit, wobei der Wirkstoff und die Hilfsflüssigkeit so ausgewählt sind, dass das Flüssigkeitsgemisch aus flüssigem Wirkstoff und Hilfsflüssigkeit fähig ist, ein Azeotrop zu bilden;
wobei die Transpirationsschicht (2) für die flüssige Phase des Flüssigkeitsgemisches undurchlässig, für dessen Gasphase jedoch durchlässig ist.

12. Verwendung der Vorrichtung nach einem der Ansprüche 1 bis 8 oder einer nach einem der Ansprüche 9 bis 11 hergestellten Vorrichtung für eine der folgenden Anwendungen:
Bekämpfung von parasitierenden Milben in Bienenwohnungen;
Bekämpfung von Schädlingen in einem Vorratsraum und/oder Lagerraum;
Desodorierung der Luft in Innenräumen wie Fahrzeuginnenräumen, Flugzeuginnenräumen, Verkaufsräumen, Wohn-, Schlaf-oder Toilettenräumen;
Linderung von Atembeschwerden.
